# EUROPEAN PATENT SPECIFICATION

(11) **EP 2 856 855 B1**
(45) Date of publication and mention of the grant of the patent: **26.10.2016**
(21) Application number: 14184717.8
(22) Date of filing: 15.09.2014
(51) Int. Cl.: A01D 57/02

(54) **Reel finger with alignment pin**
Haspelfinger mit Zentrierstift
Doigt de rabatteur avec broche d'alignement

(30) Priority: 04.10.2013 US 201314046303
(43) Date of publication of application: 08.04.2015
(73) Proprietor: Deere & Company, Moline, IL 61265 (US)
(72) Inventor: Pierson, Joshua, Davenport, IA 52807 (US); Neely, Jesse R, Annawan, IL 61234 (US); Herringshaw, Brian, Bettendorf, IA 52722 (US); Demay, Terry L, Annawan, IL 61234 (US)
(74) Representative: Holst, Sönke

(56) References cited:
- EP-A1- 0 347 201
- EP-A2- 0 475 405
- WO-A1-2004/084618
- US-A1- 2005 091 955
- US-B1- 7 650 737

## Description

This invention relates to harvesting heads for agricultural harvesters. In particular, it relates to reels for harvesting heads. More particularly, it relates to crop-engaging fingers mounted on bats of the reels.

Harvesting heads for agricultural harvesters typically have reels that engage the top parts of the crop plants and sweep them backwards on to the harvesting head itself. This ensures that the crop plants, when the roots are severed by reciprocating knife at the base of the plant, fall onto the harvesting head itself, instead of falling on the ground and being wasted.

The reels are typically constructed as several long bats that have fingers that extend downward from the bat and engage the tops of the crop plants. The bats are typically formed as elongate aluminum alloy tubes between 2 and 4 cm in diameter. The fingers include an upper end that is clamped to the outer surface of the tube and a lower end in the form of an elongate finger that is formed integral with the upper end. As the bat rotates, it rotates all of the fingers causing the lower ends of the fingers to gently engage the upper portion of the crop and to pull it backwards.

The fingers are prevented from rotating around the bat by alignment structures that mechanically engage the finger in the bat such that the finger cannot rotate about the bat without the alignment structures being sheared. The alignment structure is typically a plastic or metal pin or protrusion, a screw or a bolt.

In one arrangement, the finger is injection molded out of plastic. In this case, the alignment structure is typically a plastic protrusion, stud, or surface irregularity that is injection molded integral with the finger and of the same material and that mechanically engages the bat. EP 0 347 201 A1, US 7 650 737 B1 and US 2005/0091955 A1 show such a finger for a reel with a lower crop engaging portion and an upper portion encircling the reel bat. The finger consists of molded material and comprises a protrusion molded onto the bottom of the upper portion which extends into a hole within the reel bat.

When these plastic alignment structures are placed under load, they tend to wear against the aluminum alloy of the bat, and eventually the plastic alignment structure either shears off or is worn away. When this happens, the fingers are free to rotate about the bat and no longer engage the tops of the crop plants properly.

EP 0 475 405 A2 shows a finger for a reel with a lower crop engaging portion and an upper portion encircling the reel bat. A pin made of steel is inserted into a corresponding opening in the bottom of the upper portion and extends into a hole within the reel bat.

WO 2004/084618 A1 shows another finger for a reel with a lower part into which a pin is inserted. The pin extends into a corresponding hole in the bottom of the bat. A screw extending vertically through the bat mounts the pin and the finger to the reel.

What is needed therefore is a finger with stronger alignment members that are less subject to wear or shearing. It is an object of this invention to provide such a finger.

A finger configured to be mounted on a bat of a reel of an agricultural harvesting head is provided, the bat defining a mating aperture configured to receive a portion of the finger, the finger comprising: an elongate lower finger portion configured to engage upper portions of crop plants; an upper clamp portion integrally formed with the elongate lower finger portion, wherein the upper clamp portion defines a central region configured to receive the bat, the upper clamp portion further comprising, a strap comprising a polymer that is configured to wrap around the bat and to be attached to the bat, and an alignment pin disposed on an inner surface of the strap and extending into the central region wherein the alignment pin is configured to be received within a mating aperture in the bat, and wherein an outer surface of the alignment pin comprises a material having greater wear resistance and/or greater tensile strength than the upper clamp portion. The alignment pin comprises a ring that is disposed about a central portion of the alignment pin to provide a more wear resistant and stronger outer surface for the alignment pin. The central portion of the alignment pin is molded out of the same material and in the same process as the elongate lower finger portion. The ring comprises a more wear resistant and stronger material than the material that forms the upper clamp portion and the central portion. The upper clamp portion and that the outer surface of the ring abuts the interior surface of the mating aperture.

The finger may further comprise a threaded fastener that extends through a first aperture in a free end of the strap and is threadedly received in a second aperture formed in a receiver of the upper clamp portion.

The threaded fastener may not extend into the bat.

The alignment pin may be generally circular in cross-section, and the mating aperture may be generally circular in cross-section.

An embodiment of the invention is shown in the drawings, in which:

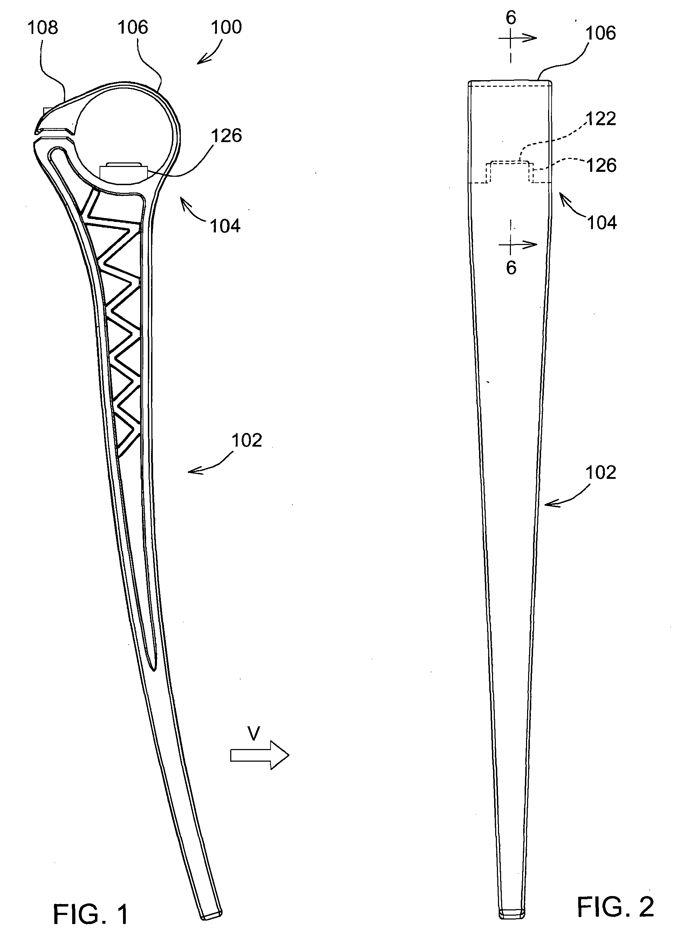

Figure 1 is a side view of reel finger in accordance with the present invention.
Figure 2 is a front view of the reel finger of Figure 1.

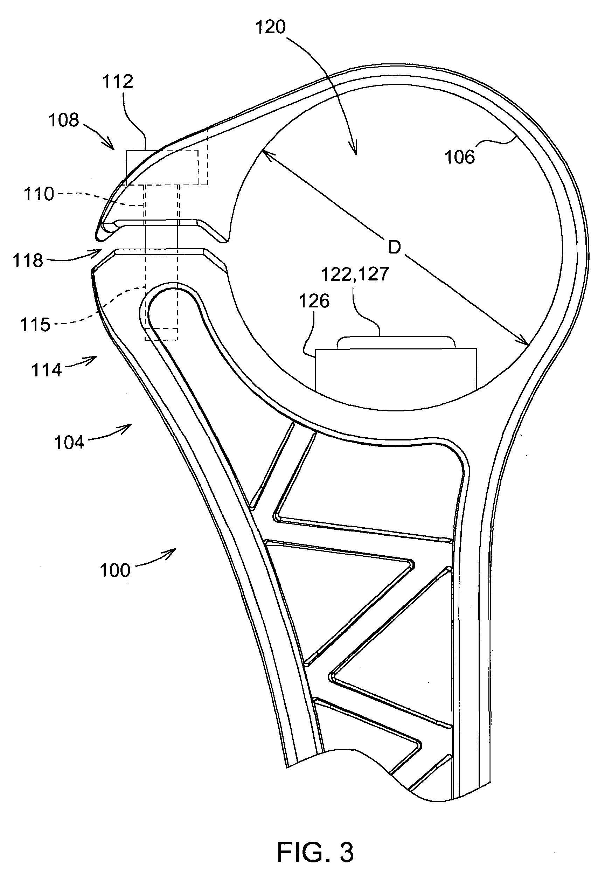

Figure 3 is a fragmentary side view of the upper portion of the reel finger of Figures 1-2.

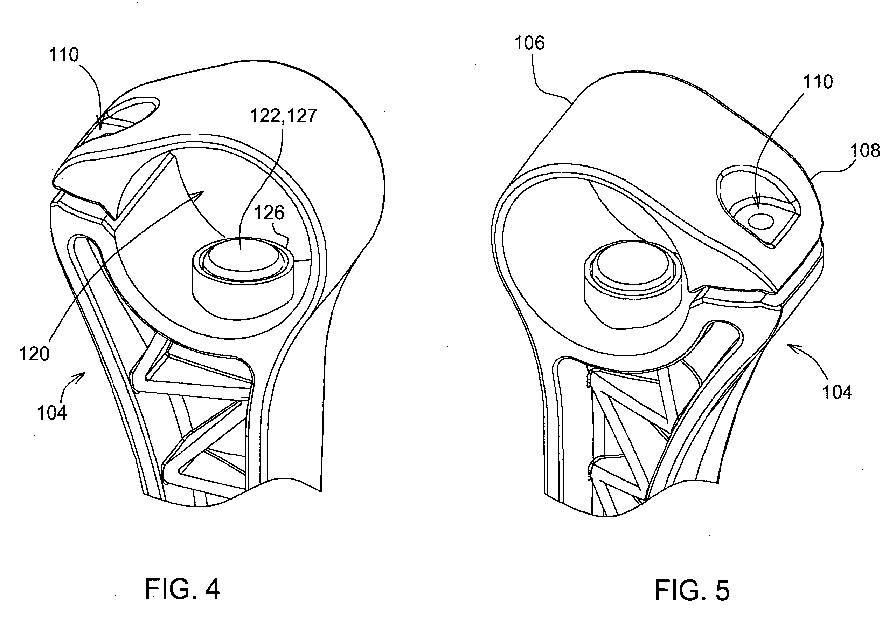

Figure 4 is a fragmentary perspective left side view of the upper portion of the reel finger of Figures 1-3.
Figure 5 is a fragmentary perspective right side view of the upper portion of the reel finger of Figures 1-4.
Figure 6 is a longitudinal cross-sectional view of the reel finger of Figures 1-5 taken at section line 6-6 in Figure 2.

Referring to the Figures herein, a reel finger 100 comprises an elongate lower finger portion 102 and an upper clamp portion 104. The lower finger portion 102 and the upper clamp portion 104 are integrally formed, preferably as a single injection molded polymeric part.

The reel finger 100 may be formed of nylon, polypropylene, high molecular weight polyethylene, and ultra-high molecular weight polyethylene. The reel finger may be reinforced, such as by glass fibers, carbon fibers, glass beads or other like materials used to strengthen or improve the wear resistance of thermoplastics.

The upper clamp portion 104 comprises a strap 106 and a collar 108. The collar 108 is disposed at a distal end of the strap 106 and defines an aperture 110 configured to receive a threaded fastener 112 such as a bolt or screw. The upper clamp portion 104 also comprises a receiver 114 which is provided with an aperture 115 to receive and threadedly engage the threaded shank of the threaded fastener 112.

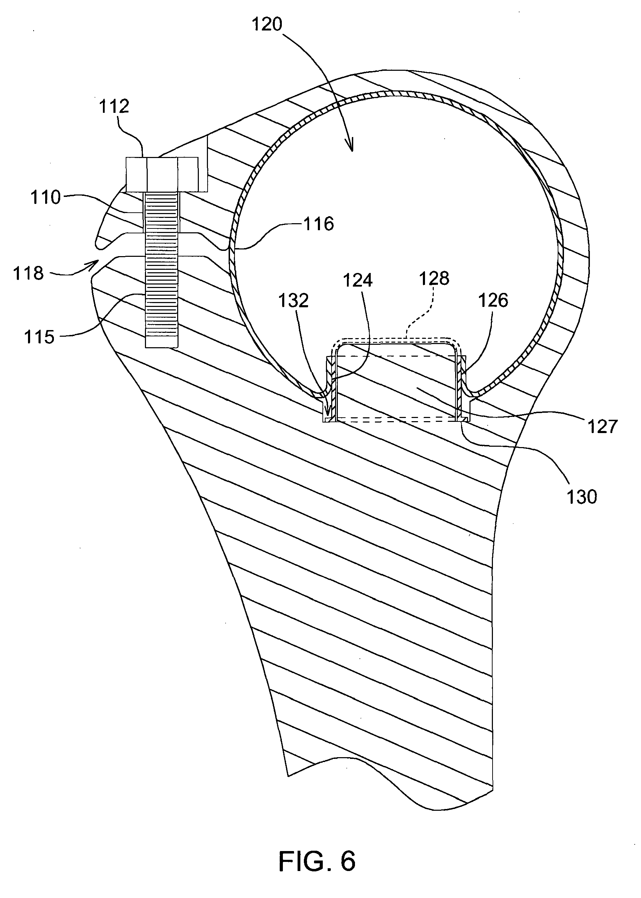

To mount the reel finger 100 on a bat 116 (Figure 6) the collar 108 and the strap 106 are flexed outward away from the receiver 114 to enlarge the gap 118 that is located between the collar 108 and the receiver 114. When the gap 118 has been increased to the diameter of the bat 116 (which is roughly equal to the as-molded diameter "D" formed by the strap 106), the bat 116 is forced into a generally circular central region 120 formed by the as-molded shape of the strap 106.

The strap 106 is then flexed back to its original shape (substantially as shown in all of Figures herein) in which the generally circular central region 120 is circular, and the threaded fastener 112 is inserted into the aperture 110 in the collar 108. The free end of the threaded fastener 112 is inserted until it engages the aperture 115, at which time the threaded fastener 112 is threaded into the aperture 115 which encloses the bat 116 and clamps the upper clamp portion 104 on to the bat 116. The threaded fastener 112 in the illustrated arrangement does not extend into the bat 116. Instead, it pulls the two free ends of the strap 106 together, thereby increasing the tension in the strap 106 and therefore the pressure of the strap 106 against the bat 116. The threaded fastener 112 does not extend into the bat 116 and therefore does not function to align the reel finger 100 with respect to the bat 116.

The friction between the inner surface of the strap 106 and the outer surface of the bat 116 may not be sufficient to keep the reel finger 100 from rotating on the bat 116 when the lower finger portion 102 engages the tops of crop plants during harvesting.

For this reason, the upper clamp portion 104 further comprises an alignment pin 122 that extends inwardly from an inner surface of the strap 106 into the generally circular central region 120 and generally toward the center of the generally circular central region 120. The bat 116 (Figure 6) is generally circular in cross-section, and is provided with a mating aperture 124 that is configured to receive the alignment pin 122. The alignment pin 122 may be circular in cross-section.

The alignment pin 122 further comprises a ring 126 that is disposed about a central portion 127 of the alignment pin 122 to provide a more wear resistant and stronger outer surface for the alignment pin 122.

The central portion 127 of the alignment pin is preferably molded out of the same material (and in the same process) as the elongate lower finger portion 102 and the upper clamp portion 104. It is the outer surface of the ring 126 that abuts the interior surface of the mating aperture 124.

The ring 126 comprises a more wear resistant and stronger material than the material that forms the upper clamp portion 104 and that forms the central portion 127. This material may be a plastic or a metal.

In one arrangement the ring 126 comprises a ferrous alloy. In another arrangement it comprises a brass alloy. In another arrangement the ring 126 is comprised of a bronze alloy. In another arrangement, the ring 126 comprises a reinforced plastic. In another arrangement, the ring 126 comprises a glass or fiber filled plastic. The ring 126 may have an integrally formed cover portion 128 disposed at its upper end such that it forms a cap. The ring 126 may have a flange 130 disposed at its lower end to provide greater strength and easier assembly. The ring 126 may be right circular cylinder in cross-section.

In one arrangement, the ring 126 may be inserted into a mold cavity, the mold cavity closed, and the plastic that forms the reel finger 100 can be then be injected into the mold cavity to form the finger integrally with the ring 126. In another arrangement, the reel finger 100 can be molded and the ring 126 later pressed onto the (now solid) alignment pin 122.

The upper clamp portion 104 is provided with a recess 132 that extend circumferentially around the base of the alignment pin 122 and is configured to receive the lower end of the ring 126.

Finally, it may be beneficial to provide a coating, layer or skin that is sealed against the outer surface of alignment pin 122 (and/or the ring 126) to protect the alignment pin 122 (and/or the ring 126) from the elements and thereby help to prevent corrosion of the alignment pin 122 (and/or the ring 126). Such a coating, layer or skin, depending upon its thickness, could also provide a relatively tight fit between the alignment pin 122 (and/or the ring 126) and the aperture 124 of the bat 116 that would reduce relative movement between the alignment pin 122 and/or the ring 126, and aperture, and thus to reduce chafing.

## Claims

1. A finger (100) configured to be mounted on a bat (116) of a reel of an agricultural harvesting head, the bat (116) defining a mating aperture (124) configured to receive a portion of the finger (100), the finger (100) comprising:
an elongate lower finger portion (102) configured to engage upper portions of crop plants;
an upper clamp portion (104) integrally formed with the elongate lower finger portion (102), wherein the upper clamp portion (104) defines a central region (120) configured to receive the bat (116), the upper clamp portion (104) further comprising a strap (106) comprising a polymer that is configured to wrap around the bat (116) and to be attached to the bat (116), and an alignment pin (122) disposed on an inner surface of the strap (106) and extending into the central region (120) wherein the alignment pin (122) is configured to be received within a mating aperture (124) in the bat (116),
wherein an outer surface of the alignment pin (122) comprises a material having greater wear resistance or greater tensile strength than the upper clamp portion (104),
**characterized in that** said alignment pin (122) comprises a ring (126) that is disposed about a central portion (127) of the alignment pin (122) to provide a more wear resistant and stronger outer surface for the alignment pin (122), that the central portion (127) of the alignment pin is molded out of the same material and in the same process as the elongate lower finger portion (102) and the upper clamp portion (104), that the ring (126) comprises a more wear resistant and stronger material than the material that forms the upper clamp portion (104) and the central portion (127) and that the outer surface of the ring (126) is arranged to abut the interior surface of the mating aperture (124).

2. The finger (100) of Claim 1, wherein the alignment pin (122) is solid.

3. The finger (100) of Claim 1, wherein the alignment pin (122) comprises a plastic.

4. The finger (100) of Claim 3, wherein the alignment pin (122) comprises a reinforced plastic.

5. The finger (100) of Claim 1, further comprising a threaded fastener (112) that extends through a first aperture (110) in a free end of the strap (106) and is threadedly received in a second aperture (115) formed in a receiver (114) of the upper clamp portion (104).

6. The finger (100) of Claim 5, wherein the threaded fastener (112) does not extend into the bat (116).

7. The finger (100) of Claim 1, wherein the alignment pin (122) is generally circular in cross-section, and wherein the mating aperture (124) is generally circular in cross-section.

## Patentansprüche

1. Finger (100), gestaltet zum Befestigen an einem Zinkenträger (116) einer Haspel eines landwirtschaftlichen Erntekopfs, wobei der Zinkenträger (116) eine Passöffnung (124) definiert, die dafür gestaltet ist, einen Teil des Fingers (100) aufzunehmen, wobei der Finger (100) umfasst:
einen langgestreckten unteren Fingerteil (102), der dafür gestaltet ist, obere Teile von Erntepflanzen zu erfassen;
einen oberen Klemmteil (104), der integral mit dem langgestreckten unteren Fingerteil (102) gebildet ist, wobei der obere Klemmteil (104) einen Zentralbereich (120) definiert, der dafür gestaltet ist, den Zinkenträger (116) aufzunehmen, wobei der obere Klemmteil (104) ferner einen Bügel (106) umfasst, der ein Polymer umfasst und dafür gestaltet ist, sich um den Zinkenträger (116) zu legen und an dem Zinkenträger (116) befestigt zu werden, und einen Ausrichtstift (122), der an einer Innenoberfläche des Bügels (106) angeordnet ist und in den Zentralbereich (120) vorragt, wobei der Ausrichtstift (122) dafür gestaltet ist, in eine Passöffnung (124) in dem Zinkenträger (116) aufgenommen zu werden,
wobei eine Außenoberfläche des Ausrichtstifts (122) ein Material umfasst, das eine höhere Verschleißfestigkeit oder höhere Zugfestigkeit als der obere Klemmteil (104) aufweist,
**dadurch gekennzeichnet, dass** der Ausrichtstift (122) einen Ring (126) umfasst, der um einen Zentralteil (127) des Ausrichtstifts (122) angeordnet ist, um eine verschleißfestere und stärkere Außenoberfläche für den Ausrichtstift (122) bereitzustellen, dass der Zentralteil (127) des Ausrichtstifts aus dem gleichen Material und bei dem gleichen Verfahren geformt ist wie der langgestreckte untere Fingerteil (102) und der obere Klemmteil (104), dass der Ring (126) ein verschleißfesteres und stärkeres Material umfasst als das Material, das den oberen Klemmteil (104) und den Zentralteil (127) bildet, und dass die Außenoberfläche des Rings (126) dafür gestaltet ist, an der Innenoberfläche der Passöffnung (124) anzuliegen.

2. Finger (100) gemäß Anspruch 1, wobei der Ausrichtstift (122) massiv ist.

3. Finger (100) gemäß Anspruch 1, wobei der Ausrichtstift (122) einen Kunststoff umfasst.

4. Finger (100) gemäß Anspruch 3, wobei der Ausrichtstift (122) einen verstärkten Kunststoff umfasst.

5. Finger (100) gemäß Anspruch 1, ferner umfassend ein Gewinde-Befestigungselement (112), das durch eine erste Öffnung (110) in einem freien Ende des Bügels (106) verläuft und über Gewindeeingriff in eine zweite Öffnung (115) aufgenommen wird, die in einer Aufnahme (114) des oberen Klemmteils (104) gebildet ist.

6. Finger (100) gemäß Anspruch 5, wobei sich das Gewinde-Befestigungselement (112) nicht in den Zinkenträger (116) erstreckt.

7. Finger (100) gemäß Anspruch 1, wobei der Ausrichtstift (122) einen allgemein kreisförmigen Querschnitt aufweist und wobei die Passöffnung (124) einen allgemein kreisförmigen Querschnitt aufweist.

## Revendications

1. Doigt (100) configuré de manière à être monté sur une latte (116) d'un rabatteur d'une tête de moissonnage agricole, la latte (116) définissant une ouverture de couplage (124) configurée de manière à recevoir une partie du doigt (100), le doigt (100) comprenant:
une partie de doigt inférieure allongée (102) configurée pour engager des parties supérieures de plantes de culture;
une partie de pince supérieure (104) formée intégralement avec la partie de doigt inférieure allongée (102), dans lequel la partie de pince supérieure (104) définit une région centrale (120) configurée de manière à recevoir la latte (116), la partie de pince supérieure (104) comprenant en outre une bride plate (106) comprenant un polymère qui est configurée de manière à s'enrouler autour de la latte (116) et à être attachée à la latte (116), et une broche d'alignement (122) disposée sur une surface intérieure de la bride plate (106) et s'étendant dans la région centrale (120), dans lequel la broche d'alignement (122) est configurée de manière à être reçue à l'intérieur d'une ouverture de couplage (124) dans la latte (116),
dans lequel une surface extérieure de la broche d'alignement (122) comprend un matériau dont la résistance à l'usure ou la résistance à la traction est supérieure celle de la partie de pince supérieure (104),
**caractérisé en ce que** ladite broche d'alignement (122) comprend un anneau (126) qui est disposé autour d'une partie centrale (127) de la broche d'alignement (122) afin de fournir une résistance à l'usure supérieure et une surface extérieure plus robuste pour la broche d'alignement (122), **en ce que** la partie centrale (127) de la broche d'alignement est moulée à partir du même matériau et dans le même procédé que la partie de doigt inférieure allongée (102) et que la partie de pince supérieure (104), **en ce que** l'anneau (126) comprend un matériau plus résistant à l'usure et plus robuste que le matériau qui constitue la partie de pince supérieure (104) et la partie centrale (127), et **en ce que** la surface extérieure de l'anneau (126) est agencée de manière à buter contre la surface intérieure de l'ouverture de couplage (124).

2. Doigt (100) selon la revendication 1, dans lequel la broche d'alignement (122) est pleine.

3. Doigt (100) selon la revendication 1, dans lequel la broche d'alignement (122) comprend un plastique.

4. Doigt (100) selon la revendication 3, dans lequel la broche d'alignement (122) comprend un plastique renforcé.

5. Doigt (100) selon la revendication 1, comprenant en outre un élément de fixation fileté (112) qui s'étend à travers une première ouverture (110) dans une extrémité libre de la bride plate (106) et qui est reçu de façon vissée dans une seconde ouverture (115) formée dans un élément de réception (114) de la partie de pince supérieure (104).

6. Doigt (100) selon la revendication 5, dans lequel l'élément de fixation fileté (112) ne s'étend pas dans la latte (116).

7. Doigt (100) selon la revendication 1, dans lequel la broche d'alignement (122) présente une section transversale essentiellement circulaire, et dans lequel l'ouverture de couplage (124) présente une section transversale essentiellement circulaire.
